# EUROPÄISCHE PATENTSCHRIFT

(11) **EP 0 764 695 B1**
(45) Veröffentlichungstag und Bekanntmachung des Hinweises auf die Patenterteilung: **05.12.2001**
(21) Anmeldenummer: 96114440.9
(22) Anmeldetag: 10.09.1996
(51) Int. Cl.: C09B 67/00, B01F 17/00

(54) **Tensidgemische**
Surfactants mixtures
Mélanges de tensio-actifs

(30) Priorität: 22.09.1995 DE 19535246
(43) Veröffentlichungstag der Anmeldung: 26.03.1997
(73) Patentinhaber: BAYER AG, 51368 Leverkusen (DE)
(72) Erfinder: Lesszinsky, Fritz, 51465 Bergisch Gladbach (DE); Wanken, Klaus-Wilfried, 51373 Leverkusen (DE); Nyssen, Peter Roger, 41542 Dormagen (DE); Riegels, Martin, Dr., 42799 Leichlingen (DE)

(56) Entgegenhaltungen:
- EP-A- 0 058 384
- EP-A- 0 497 172

## Beschreibung

Neue Tensidgemische, die als Dispergiermittel zur Formierung nicht wasserlöslicher Farbstoffe, Pigmente und Weißtöner und als Färbereihilfsmittel für Färbungen oder Weißtönen von Polyesterfasern bzw. Fasermischungen mit Wolle, Baumwolle, Polyacryl oder Polyamid mit nicht wasserlöslichen Farbstoffen bzw. Weißtönern verwendbar sind, bestehen aus Alkoxylierungsprodukten von Styrol-Phenol-Kondensaten und daraus hervorgegangenen Estern, nichtionischen Tensiden, Stellmitteln und Wasser.

Hydrophobe synthetische Fasern können mit Dispersionsfarbstoffen gefärbt bzw. mit nichtionogenen Weißtönern aufgehellt werden. Farbstoffe bzw. Weißtöner dieser Art erfordern bei der Anwendung wegen ihrer Wasserunlöslichkeit eine feindisperse Verteilung. Hierzu werden diese Farbstoffe bzw. Weißtöner im allgemeinen mit Tensiden zu einer Anwendungsform formiert, die die leichte Herstellung feindisperser Farbflotten gestatten. Diese Farbflotten sollen bezüglich der Farbmitteldispersion stabil sein. Für den Fall, daß wasserfreie Formierungen, beispielsweise über eine Sprühtrocknung, hergestellt werden sollen, erfordern die zur Sprühtrocknung einzusetzenden Dispersionen ferner eine gute thermische Stabilität. Zur Formierung werden den bei der Farbstoffsynthese meistens kristallin anfallenden Preßkuchen Dispergiermittel zugesetzt. Zum Färben, optischen Aufhellen und Bedrucken von hydrophoben synthetischen Fasern sind ferner unabhängig von der Farbstofformierung Färbereihilfsmittel erforderlich, die ebenfalls Tenside oder Gemische daraus darstellen (Chwala/Anger, Handbuch der Textilhilfsmittel, Verlag Chemie, Weinheim, New York 1977, S. 502-513).

Als Tenside für die genannten Zwecke haben Polykondensate aus ß-Naphthalinsulfonsäure und Formaldehyd Bedeutung erlangt; solche Kondensationsprodukte wurden in vielerlei Variationen hergestellt und eingesetzt, so beispielsweise unter Mitverwendung verschiedener Alkylaryl-sulfonsäuren und Halogenaryl-sulfonsäuren, sulfonierten Phenolen, β-Naphtholen, verschiedenen Stickstoffverbindungen und reaktionsfähigen Alkylarylverbindungen in Kombination mit aromatischen Sulfonsäuren. Weiterhin können für diesen Zweck Diphenyletherderivate in Kombination mit Arylsulfonaten, Kresolsulfonsäuren, Harnstoff-Formaldehyd-Kondensate in Kombination mit Phenolsulfonsäuren, sulfomethylierte Phenol-Formaldehyd-Kondensate und in zunehmendem Maße Ligninsulfonate genannt werden.

Diese bekannten Dispergiermittel führen jedoch nicht in allen Fällen zu ausreichend stabilen Farbstoffdispersionen bzw. Weißtönerdispersionen. Dieser Nachteil kann dazu führen, daß auf Färbeaggregaten, wie beispielsweise Baumfärbeapparaten und Kreuzspulapparaten, die Farbstoffe bzw. Weißtöner während der Aufheizphase agglomerieren und ausfallen. Die dabei entstehenden Ablagerungen können im Extremfall dazu führen, daß die Flottenzirkulation abbricht. Als Folge davon erhält man die sogenannten AMI-(**A**ußen-**M**itte-**I**nnen-)Effekte. Weiterhin führt die schlechte biologische Abbaubarkeit und Elimierbarkeit der genannten Tenside zu einer Belastung der anfallenden Abwässer.

Neuere Entwicklungen versuchen, die genannten Nachteile zu umgehen. So werden in EP 382138 A1 Färbereihilfsmittelgemische beschrieben, die saure Ester von Alkoxylierungsprodukten von Phenolen, nichtionogene Tenside und Carbonsäureester, Alkylbenzol, Tetralin oder ein Gemisch dieser genannten Stoffe enthalten. Diese Mischungen verbessern die Migration der Farbstoffe und erleichtern das Eindringen der Farbstoffe in das Fasermaterial; hierdurch werden stärker egalisierte Färbungen erreicht. Auch diese Mischungen entsprechen nicht allen Erfordernissen und enthalten noch biologisch schwierig zu behandelnde Anteile.

In EP 463 401 A2 werden Dispergiermittel beschrieben, die Arylsulfonsäure-Formaldehyd-Kondensate und/oder Ligninsulfonate neben aromatischen oder langkettigen aliphatischen Carbonsäuren, deren Salzen oder deren Anhydriden enthalten. Diese Dispergiermittel zeichnen sich durch eine verbesserte biologische Abbaubarkeit aus, lassen jedoch noch Wünsche bezüglich der Dispergierbarkeit offen.

Aus DE 42 29 442 A1 sind Dispergiermittel bekannt, die Alkyl- und/oder Alkenylpolyglykoside, Polyhydroxyfettsäureamide und weitere anionische, nichtionische, amphotere bzw. zwitterionische Tenside und/oder Polymere enthalten.

Aus EP-A-0 058 384 sind Tenside auf Basis oxalkylierter Naphthol-Novolake bekannt, die zur Dispergierung von Farbstoffen eingesetzt werden. Die oxalkylierten Novolake weisen dabei an jedem Arylkern eine Alkoxygruppe auf.

Aus DE 27 32 732 B2 sind Oxalkylierungsprodukte von Styrol-Phenol-Kondensaten als Dispergiermittel zur Herstellung wäßriger Farbstoffdispersionen bekannt. Die Dispergierwirkung dieser Produkte entspricht jedoch noch nicht den Erfordernissen (Zerkleinerungswirkung ist nicht optimal).

Es bestand weiterhin der Wunsch nach Dispergier- und Färbereihilfsmitteln, die neben weiter verbesserten Dispergiereigenschaften eine gute biologische Eliminierbarkeit und eine universelle Anwendbarkeit aufweisen.

Die Erfindung betrifft Tensidgemische, bestehend aus
A1) Alkoxylierungsprodukten von Styrol-Phenol-Kondensaten der Formel 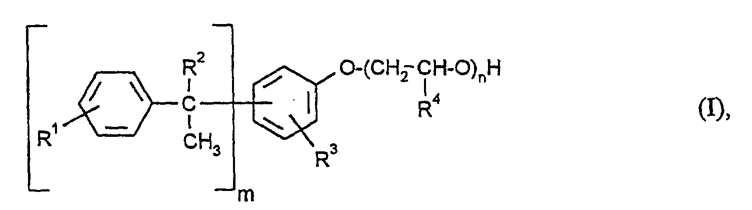 in der
   - R¹: Wasserstoffl oder C₁-C₄-Alkyl bedeutet,
   - R²: für Wasserstoff oder CH₃ steht,
   - R³: Wasserstoff, C₁-C₄-Alkyl, C₁-C₄-Alkoxy, C₁-C₄-Alkoxy-carbonyl, Phenyl oder einen ankondensierten Benzolkern bedeutet,
   - m: eine Zahl von 1 bis 3 bedeutet,
   - n: eine Zahl von 6 bis 100 bedeutet, wobei die obige Formel auch Gemische mit verschiedenen Werten für m und n umfaßt,
   - R⁴: für Wasserstoff, ein Gemisch aus Wasserstoff und CH₃ oder ein Gemisch aus Wasserstoff und Phenyl steht, wobei im Falle der Mitanwesenheit von CH₃ in den verschiedenen -(-CH₂-CH(R⁴)-O-)-Gruppen in 0 bis 60 % des Gesamtwertes von n R⁴ für CH₃ und in 100 bis 40 % des Gesamtwertes von n R⁴ für Wasserstoff steht und wobei im Falle der Mitanwesenheit von Phenyl in den verschiedenen -(-CH₂-CH(R⁴)-O-)-Gruppen in 0 bis 40 % des Gesamtwertes von n R⁴ für Phenyl und in 100 bis 60 % des Gesamtwertes von n R⁴ für Wasserstoff steht,
A2) Estern der Alkoxylierungsprodukte (I) der Formel 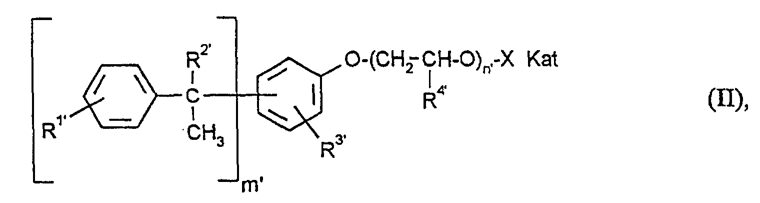 in der
   - R^{1'}, R^{2'}, R^{3'}, R^{4'}, m' und n': den Bedeutungsumfang von R¹, R², R³, R⁴, m bzw. n, jedoch unabhängig hiervon, annehmen,
   - X: die Gruppe -SO₃^{⊖}, -SO₂^{⊖} oder -PO₃^{⊖⊖} bedeutet und
   - Kat: ein Kation aus der Gruppe von Li^{⊕}, Na^{⊕}, K^{⊕}, NH₄^{⊕}, HO-CH₂CH₂-NH₃^{⊕}, 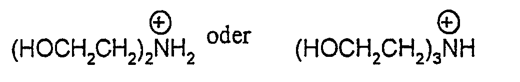 ist, wobei im Falle von X = -PO₃^{⊖⊖} zwei Kat vorliegen,
B) nichtionischen Tensiden,
C) Stellmitteln und
D) Wasser,
wobei, bezogen auf das Gesamtgewicht von A1), A2), B), C) und D), A1) 0 bis 95 %, A2) 5 bis 100 %, B) 0 bis 30 %, C) 0 bis 40 % und D) 0 bis 80 % ausmachen.

Die Erfindung betrifft weiterhin die Verwendung der oben beschriebenen neuen Tensidgemische als Dispergiermittel zur Formierung nicht wasserlöslicher Farbmittel (Farbstoffe, Pigmente bzw. Weißtöner) und als Färbereihilfsmittel.

C₁-C₄-Alkyl ist beispielsweise Methyl, Ethyl, Propyl, Isopropyl, Butyl oder Isobutyl, bevorzugt Methyl.

C₁-C₄-Alkoxy ist beispielsweise Methoxy, Ethoxy, Propoxy, Isopropoxy, Butoxy oder Isobutoxy, bevorzugt Methoxy.

C₁-C₄-Alkoxycarbonyl ist beispielsweise Methoxycarbonyl, Ethoxycarbonyl, Propoxycarbonyl, Isopropoxycarbonyl, Butoxycarbonyl, Isobutoxycarbonyl, bevorzugt Methoxycarbonyl.

Bevorzugte Kationen Kat aus der obigen Aufzählung sind Na^{⊕}, K^{⊕}, NH₄^{⊕}, HO-CH₂CH₂NH₃^{⊕}, (HO-CH₂CH₂)₂NH₂^{⊕} und (HO-CH₂CH₂)₃NH^{⊕}; besonders bevorzugtes Kat ist NH₄^{⊕}.

Ein wichtiges Kennzeichen der vorliegenden Erfindung ist das Vorliegen von Estern von Alkoxylierungsprodukten der Formel (II), bevorzugt neben den nicht veresterten Alkoxylierungsprodukten der Formel (I). Zur Herstellung der Styrol-Phenol-Kondensate wird zunächst ein Phenol oder ein Naphthol 1 bis 3-fach mit Styrol oder einem substituierten Styrol kondensiert und dieses Kondensat danach mit Ethylenoxid oder mit Ethylenoxid und Propylenoxid oder mit Ethylenoxid und Styroloxid alkoxyliert, so daß 6 bis 100 Alkylenoxidgruppen -(-CH₂-CH(R⁴)-O-)-vorliegen. Solche Alkoxylierungsprodukte von Styrol-Phenol-Kondensaten sind bereits in DE 27 32 732 B2 eingesetzt worden und können beispielsweise gemäß DE 11 21 814 B2 hergestellt werden. Dem Fachmann ist bekannt, daß bei der 1-bis 3-fachen Kondensation eines Phenols oder Naphthols mit einem Styrol vielfach Gemische verschieden hoch substituierter Kondensate entstehen. Da aus Kostengründen solche Gemische im allgemeinen nicht in die reinen Spezies getrennt werden, kann der Index m auch Werte annehmen, die von den ganzen Zahlen abweichen. In bevorzugter Weise nimmt der Index m einen Wert von 1,5-2,8, besonders bevorzugt einen Wert von 2,5-2,8 an. Der Index n nimmt im allgemeinen den Zahlenwert 6 bis 100, bevorzugt 15 bis 80 an.

Wichtige Phenole zur Herstellung der Kondensate sind Phenol selbst, Kresole, Xylenole, Oxydiphenyle und Naphthol, bevorzugt Phenol selbst oder eines der isomeren Kresole. Als Styrol zur Herstellung der Kondensate wird Styrol selbst, Vinyltoluol oder α-Methylstyrol eingesetzt, bevorzugt Styrol selbst und Vinyltoluol. Die Kondensation erfolgt in bekannter Weise, zweckmäßig in Gegenwart von Katalysatoren, wie H₂SO₄, p-Toluolsulfonsäure oder ZnCl₂. Die so herstellbaren Styrol-Phenol-Kondensate können als einheitliche Substanzen isoliert und der Oxalkylierung unterworfen werden, jedoch kann man auch Gemische verwenden, wie sie bei der Kondensation im allgemeinen zunächst anfallen. Zur Oxalkylierung kann Ethylenoxid allein oder Ethylenoxid im Gemisch mit Propylenoxid oder Ethylenoxid im Gemisch mit Styroloxid eingesetzt werden; in bevorzugter Weise wird Ethylenoxid allein oder Ethylenoxid im Gemisch mit Propylenoxid, besonders bevorzugt Ethylenoxid allein eingesetzt. Im Falle der Mitverwendung von Propylenoxid nimmt dieses 0 bis 60 % des Gesamtwertes des Index n ein, während Ethylenoxid den Rest zu 100 % darstellt; in bevorzugter Weise wird Propylenoxid in einer Menge von 1 bis 30 % des Gesamtwertes des Index n eingesetzt, während Ethylenoxid wiederum den Rest zu 100 % ausmacht. Im Falle der Mitverwendung von Styroloxid nimmt dieses 0 bis 40 % des Gesamtwertes des Index n ein, während Ethylenoxid auch in diesem Falle den Rest zu 100 % ausmacht. Bevorzugt ist die Mitverwendung von 1 bis 20 % Styroloxid. Wie dem Fachmann bekannt ist, entstehen auch bei der Oxalkylierung Substanzgemische, deren Indices n um einen vorgesehenen Mittelwert für n streuen. Solche bezüglich des Index n gemischten Oxalkylierungsprodukte werden im allgemeinen als Gemische weiterverwendet, da ihre Auftrennung in Einzelindividuen einen unvertretbar hohen Aufwand erfordern würde.

Zur Herstellung von erfindungsgemäß wichtigen Estern der Formel (II) werden die Oxalkylierungsprodukte der Formel (I) mit mehrbasischen Sauerstoffsäuren bzw. deren Derivaten umgesetzt; Derivate solcher Sauerstoffsäuren sind beispielsweise deren Säureanhydride, Säurehalogenide, Säureester oder Säureamide. Wichtige Beispiele für solche Säuren bzw. deren Derivate sind: Chlorsulfonsäure, Amidosulfonsäure, Sulfaminsäure, Phosphorpentoxid oder Phosphoroxytrichlorid. Die Veresterungen werden in einer dem Fachmann bekannten Weise durchgeführt; hierbei entstehen Monoester der genannten Alkoxylierungsprodukte (I), die, falls von einem Säurederivat ausgegangen wurde, durch Wasser, Alkalihydroxid oder Monoethanolamin in die freie Säure oder die Salze solcher Halbester der Formel (II) umgewandelt werden können.

Grundsätzlich können Oxalkylierungsprodukte der Formel (I) neben Halbestern (II) eingesetzt werden, wobei zur Bildung der Halbester (II) von anderen Oxalkylierungsprodukten als denen gemäß (I) ausgegangen wird. Dies wird in den Formeln (I) und (II) dadurch ausgedrückt, daß die Substituenten und die Indices in (II) jeweils ein Apostroph (') tragen. In bevorzugter Weise werden jedoch Halbestern (II) verwendet, die von Oxalkylierungsprodukten (I) abgeleitet sind, in denen also an die Stelle von R^{1'}, R^{2'}, R^{3'}, R^{4'}, m' und n' die entsprechenden Reste und Indices R¹, R², R³, R⁴, m und n treten. Solche Gemische von A1) und A2) können so hergestellt werden, daß man einen Teil des Oxalkylierungsproduktes zurückläßt, der den Bestandteil A1) darstellt und einen anderen Teil von (I) in der genannten Weise zu A2) verestert, gegebenenfalls neutralisiert und anschließend beide Anteile vermengt. Selbstverständlich ist es auch möglich und stellt eine vorteilhafte Variante dar, daß man ein Alkoxylierungsprodukt (I) mit unterstöchiometrischen Mengen Säure oder Säurederivat umsetzt und somit automatisch ein Gemisch der Bestandteile A1) und A2) erhält.

In bevorzugter Weise betrifft die Erfindung Tensidgemische, die als Bestandteil A1) Alkoxylierungsprodukte der Formel 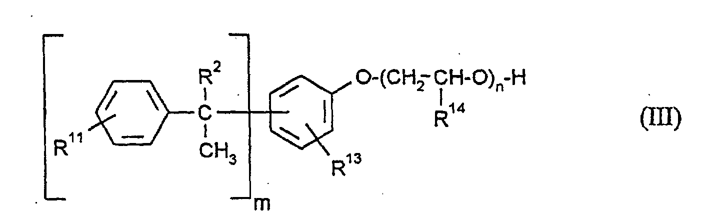 enthalten, in der
- R¹¹: Wasserstoff oder CH₃,
- R¹³: Wasserstoff, CH₃, OCH₃ oder COOCH₃ und
- R¹⁴: Wasserstoff oder Methyl bedeuten, wobei für R¹⁴ bei Mitanwesenheit von CH₃ das gleiche Proviso wie für R⁴ gilt, und
- R², m und n: den Bedeutungsumfang, der oben angegeben ist, haben.

Von diesen Alkoxylierungsprodukten der Formel (III) sind in diesem bevorzugten Fall auch die Ester A2) abgeleitet.

In besonders bevorzugter Weise werden Alkoxylierungsprodukte A1) und davon abgeleitete Ester A2) eingesetzt, die der Formel 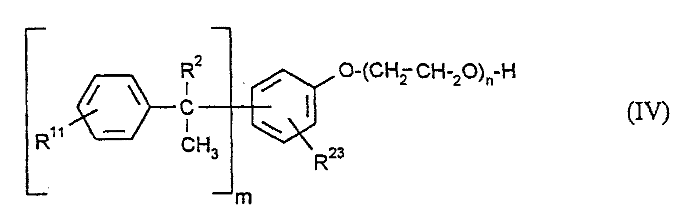 entsprechen, in denen
- R²³: für Wasserstoff oder CH₃ steht und
- R¹¹, R² und n: den Bedeutungsumfang in Formel (III) haben.

In ganz besonders bevorzugter Weise werden Alkoxylierungsprodukte als Bestandteil A1) und davon abgeleitete Ester A2) eingesetzt, die der Formel 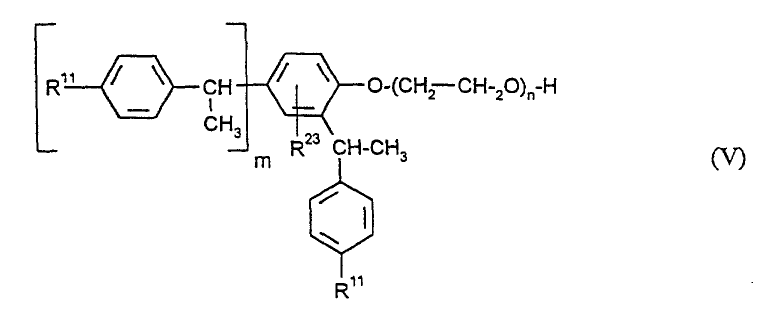 entsprechen, in der
- R¹¹, R²³ und n: den Bedeutungsumfang wie in Formel (IV) haben.

Als nichtionische Tenside und damit als Bestandteil B) der erfindungsgemäßen Tensidgemische kommen Anlagerungsprodukte von Ethylenoxid, Propylenoxid oder Styroloxid sowie Mischungen von Ethylenoxid und Propylenoxid bzw. Ethylenoxid und Styroloxid an Fettalkohole, Fettamine, Fettsäuren und Fettsäureamide in Frage, deren Kettenlänge 6 bis 20 C-Atome, bevorzugt 12 bis 20 C-Atome, beträgt. Ferner kommen solchen Anlagerungs-(Alkoxylierungs-)produkte an Phenole und Alkylphenole mit 4 bis 12 C-Atomen im Alkylteil in Frage. Die Zahl der angelagerten Alkylenoxide beträgt hierbei 4 bis 100, bevorzugt 6 bis 50, wobei solche Zahlen in einer dem Fachmann geläufigen Weise Mittelwerte um den vorgesehenen Wert darstellen.

Als Stellmittel und damit Bestandteile C) der erfindungsgemäßen Tensidgemische, mit deren Hilfe geeignete Viskositäten der erfindungsgemäßen Tensidgemische bzw. der damit herstellbaren Farbmittelformierungen eingestellt werden, kommen dem Fachmann bekannte Substanzen für diesen Zweck, wie Propylenglykol, Ethylenglykol, Polyethylenglykol, Butyldiglykol, Isopropanol oder 1-Methoxy-2-propanol in Frage.

Die Mengen der einzelnen Bestandteile der erfindungsgemäßen Tensidgemische betragen, jeweils bezogen auf das Gesamtgewicht der Bestandteile A1), A2), B), C) und D), für A1) 0 bis 95 %, bevorzugt 0 bis 85 %, für A2) 5 bis 100 %, bevorzugt 15 bis 100 %, für B) 0 bis 30 %, bevorzugt 5 bis 20 %, für C) 0 bis 40 %, bevorzugt 5 bis 30 % und für D) 0 bis 80 %. Diese Gewichtsprozente zeigen an, daß die Mitverwendung des nicht veresterten Alkoxylierungsproduktes A1), der nichtionischen Tenside, der Stellmittel und des Wassers fakultativ sind, in bevorzugter Weise aber nichtionisches Tensid, Stellmittel oder beide vorliegen. In einer weiteren bevorzugten Variante liegt auch A1 neben A2 vor und zwar in einem Verhältnis von 20 bis 60 % für A2 bei 40 bis 80 % für A1. Für den Fall des Vorliegens von nichtionischem Tensid, Stellmittel, Wasser oder mehreren von ihnen gehen die Anteile von A1) und A2) entsprechend zurück, wobei aber deren Verhältnis zueinander, ausgedrückt durch die sich zu 100 Relativ-% (= Summe von A1) und A2)) ergänzenden Werte, erhalten bleibt. Die große Spanne des Gewichtsanteils von Wasser zeigt weiterhin an, daß die erfindungsgemäßen Tensidgemische in wäßriger Form verschiedener Konzentrationen gelagert, versandt bzw. angewendet werden können, daß aber ebensogut eine wasserfreie, beispielsweise durch Sprühtrocknung erhaltene Form der erfindungsgemäßen Tensidgemische gelagert, versandt oder verwendet werden kann.

In bevorzugter Weise sind jedoch die erfindungsgemäßen Tensidgemische bezüglich des Bestandteils A1) und bezüglich des Bestandteils B) von 0 verschieden. Bezüglich des Bestandteils A1) hat sich sogar gezeigt, daß ein niedriger, unter 100 Mol-% liegender Veresterungsgrad, wie er durch den Vorzugsbereich für den Bestandteil A2) ausgedrückt wird, besonders gute dispergierende Eigenschaften aufweist.

Im Einzelfall kann es wünschenswert sein, zur Anpassung optimaler Formierbedingungen an die unterschiedlichen nicht wasserlöslichen Farbstoffe bzw. Weißtöner oder zur optimalen Einstellung der erfindungsgemäßen Tensidgemische als Färbereihilfsmittel zum Färben und Bedrucken bzw. Weißtönen von hydrophoben synthetischen Fasern weitere Dispergiermittel aus der Reihe der anionischen Tenside zuzusetzen. Selbstverständlich können auch Gemische mehrerer von ihnen zugesetzt werden. Zusätzliche anionische Tenside sind beispielsweise Kondensationsprodukte von aromatischen Sulfonsäuren mit Formaldehyd, wie (Alkyl)Naphthalinsulfonsäure-Formaldehyd-Kondensate, (Alkyl)Naphthalinsulfonsäure-Benzolsulfonsäure-Formaldehyd-Kondensate, Phenol-Formaldehyd-Natriumbisulfit-Kondensate, Ligninsulfonate, beispielsweise solche die nach dem Sulfit- oder Kraft-Verfahren gewonnen werden. Ligninsulfonate sind vorzugsweise solche Produkte, die teilweise hydrolysiert, oxidiert, propoxyliert oder desulfoniert und nach bekannten Verfahren fraktioniert werden, beispielsweise fraktioniert nach dem Molekulargewicht oder nach dem Sulfonierungsgrad; auch Gemische aus Sulfit- und Kraft-Ligninen sind gut wirksam. Solche Ligninsulfonate weisen durchschnittliche Molekulargewichte zwischen 1000 und 100 000 auf, haben einen Gehalt an aktivem Ligninsulfonat von mindestens 80 % und einen möglichst niedrigen Gehalt an mehrwertigen Kationen; der Sulfonierungsgrad kann in weiten Grenzen variieren.

Für den Fall der Verwendung der erfindungsgemäßen Tensidgemische zur Formierung nicht wasserlöslicher Farbstoffe bzw. Weißtöner seien als solche Farbstoffe Dispersionsfarbstoffe und anorganische oder organische Pigmente genannt. Dispersionsfarbstoffe sind beispielsweise solche aus der Azo-, Disazo-, Anthrachinon-, Cumarin-, Isoindolenin-, Chinolin- und Methin-Reihe.

Geeignete organische Pigmente sind beispielsweise solche der Azo-, Disazo-, Polyazo-, Anthrachinon-, Thioindigo-Reihe, ferner andere polycyclische Pigmente, beispielsweise aus der Phthalocyanin-, Chinacridon-, Dioxazin-, Naphthalintetracarbonsäure-, Perylen-tetracarbonsäure- oder Isoindolin-Reihe sowie Metallkomplex-Pigmente oder verlackte Farbstoffe, wie Ca-, Mg-, Al-Lacke von sulfonsäure-und/oder carbonsäuregruppenhaltigen Farbstoffen, als auch Ruße, die als Pigment zu verstehen sind und von denen eine große Zahl beispielsweise aus Color-Index, 2. Auflage, bekannt sind. Insbesondere zu nennen sind saure bis alkalische Ruße aus der Gruppe Furnace-Ruße oder Gas-Ruße. Weitere anorganische Pigmente sind beispielsweise Zinksulfide, Ultramarin, Titandioxide, Eisenoxide, Nickel- oder Chromantimontitandioxide, Kobaltblau und Chromoxide.

Unter dem Begriff "Formieren" wird die Überführung des aus seinem Herstellungsverfahren gewonnenen Farbstoffes (Dispersionsfarbstoff, Pigment, Weißtöner) in eine für seine färberische Anwendung handhabbare Form verstanden. Zu dieser färberischen Anwendung sollen die genannten Farbstoffe in möglichst feiner Verteilung (Dispersion) vorliegen. Die Überführung der Farbstoffe in diese möglichst feine Verteilung erfolgt durch Mahlung in geeigneten Mühlen, beispielsweise in Kugel-, Perl- oder Sandmühlen. Hierzu wird in grundsätzlich bekannter Weise der Farbstoff oder ein Farbstoffgemisch zusammen mit einem oder mehreren Dispergiermitteln in einem flüssigen Medium, vorzugsweise in Wasser, aufgeschlämmt und diese Aufschlämmung der Einwirkung von Scherkräften in einer Mahlung ausgesetzt, wobei die ursprünglich vorhandenen Farbstoffteilchen mechanisch soweit zerkleinert werden, daß eine für Färbereizwecke optimale spezifische Oberfläche erreicht wird und die Sedimentation des Farbstoffs in der Farbflotte möglichst gering ist. Die Teilchengrößen der Farbstoffe liegen hierbei im allgemeinen zwischen 0,01 und 5 µm, vorzugsweise in der Nähe von etwa 0,05 bis 1 µm. Zu den so erhaltenen Farbstoffdispersionen können weitere Hilfsmittel gegeben werden, beispielsweise Fungizide und Antrocknungsverhinderer, wie Glycerin.

Es kann jedoch wünschenswert sein, solche Farbstoff-Formierungen in trockener Form, beispielsweise zu Versand- oder Lagerzwecken, anzufertigen. Zur Herstellung solcher Farbstoff-Formierungen in fester Form wird den oben beschriebenen flüssigen Farbstoff-Formierungen Flüssigkeit, vornehmlich Wasser, entzogen, beispielsweise durch Vakuumtrocknung, Gefriertrocknung, durch Trocknung auf Walzentrocknern, vorzugsweise aber durch Sprühtrocknung. Zur störungsfreien Trocknung kann den flüssigen Formierungen vor der Trocknung ein Entschäumer zugesetzt werden; zur störungsfreien Handhabung der bei der Trocknung entstehenden Pulver bzw. Granulate (Gefahr der Staubbildung durch Abrieb) kann vor oder nach der Trocknung vorteilhaft ein Entstaubungsmittel zugesetzt werden.

Die mit den erfindungsgemäßen Tensidmischungen herstellbaren Farbstoff-Formierungen eignen sich beispielsweise zum Färben und Bedrucken bzw. Weißtönen von hydrophoben synthetischen Fasern, beispielsweise von Textilien aus aromatischen Polyestern, Celluloseestern oder aromatischen Polyamiden, gegebenenfalls im Gemisch mit Wolle oder Baumwolle. Hierfür kann beispielsweise eine Mischung aus 10 bis 50 Teilen eines Dispersionsfarbstoffes, Pigments oder Weißtöners (oder eines Gemisches mehrerer von ihnen) mit 10 bis 50 Teilen des erfindungsgemäßen Tensidgemisches und 0,1 bis 1,5 Teilen eines Netzmittels in einer Perlmühle gemahlen werden (Teile = Gewichtsteile). Die Färbung eines Fasergutes der oben beschriebenen Art erfolgt sodann in bekannter Weise, vorzugsweise aus wäßriger Suspension und gegebenenfalls in Gegenwart von Carriern, bei 80 bis etwa 110°C nach dem Ausziehverfahren oder bei 110 bis 140°C nach dem Hochtemperatur-Verfahren im Färbeautoklav. Man erhält auf diese Weise Färbungen mit sehr guten anwendungstechnischen Eigenschaften und hoher Egalität.

Die erfindungsgemäßen Tensidmischungen und die damit herstellbaren Farbstoff-bzw. Weißtöner-Formierungen zeichnen sich durch folgende Vorteile aus:
- Die hergestellten Farbstoff-(Weißtöner-)Formierungen ergeben stabilere Dispersionen als solche mit herkömmlichen Dispergiermitteln; dies zeigt sich durch ein Nicht-Agglomerieren des Farbstoffes über lange Zeit hinweg.
- Die mit erfindungsgemäßen Tensidmischungen hergestellten Farbstoff-(Weißtöner-)Formierungen zeigen eine verbesserte thermische Stabilität, verglichen mit den herkömmlich hergestellten Formierungen; dies zeigt sich durch eine große Hitzebeständigkeit beispielsweise beim Sprühtrocknen der Farbstoff-(Weißtöner-)Formierungen und beim Hochtemperaturfärben im Färbeautoklav. Herkömmliche Farbstoff-(Weißtöner-)Formierungen ohne diese Hitzebeständigkeit führen beim Hochtemperaturfärben zum Ausfallen der Farbstoffe bzw. Weißtöner aus der Färbeflotte; diese ausgefallenen Farbstoffe bzw. Weißtöner lassen sich nur noch unvollständig für den Färbevorgang (das Weißtönen) nutzen und ziehen im allgemeinen unegal auf die Faser des Färbegutes auf.
- Die gute Dispergierfähigkeit der erfindungsgemäßen Tensidgemische resultiert in der Notwendigkeit einer geringeren Menge an Dispergiermittel pro festgelegter Menge Farbstoff bzw. Weißtöner, so daß Farbstoff-(Weiß-töner)Formierungen mit einer höheren Farbstoff-(Weißtöner-)Konzentration möglich werden. Desweiteren ist bei der Formierung infolge der verbesserten Dispergierfähigkeit eine geringere Anzahl von Mahlschritten erforderlich.
- Die erfindungsgemäßen Tensidgemische sind preiswerter als bisher vielfach eingesetzte Ligninsulfonate.
- Viele herkömmliche Dispergiermittel, so beispielsweise Ligninsulfate, sind biologisch schwer abbaubar und schwer biologisch eliminierbar, während die erfindungsgemäßen Tensidgemische in erleichterter Weise auf Klärschlämme aufziehen und somit biologisch eliminierbar sind.
- Beim Einsatz der erfindungsgemäßen Tensidgemische für die Herstellung von Flüssigrezepturen kann auf die üblicherweise notwendigen Zusätze von Antrocknungsverhinderern und Gefrierschutzmitteln verzichtet werden.
- Bei Einsatz der erfindungsgemäßen Tensidgemische als Färbereihilfsmittel kann auf den üblicherweise notwendigen Zusatz eines Egalisiermittels verzichtet werden.
- Färbungen bzw. Weißtönen unter Zusatz der erfindungsgemäßen Tensidgemische sind deutlich egaler als die nach üblichen Rezepturen erhaltene Färbungen.
- Färbungen bzw. Weißtönen von Synthesefasern, die unter Zusatz der erfindungsgemäßen Tensidgemische erfolgen, führen nicht zu der sonst oft beobachteten verringerten Flottenzirkulation und den damit verbundenen AMI-Effekten.

### Beispiele

Bei den nachfolgenden Beispielen handelt es sich bei Teilen um Gewichtsteile und bei Prozent um Gewichtsprozent.

### A. Formierungsbeispiele

### Beispiel 1

- 34 Teile: Farbstoff C.I. Disperse Red 343 (in Form des wasserfeuchten Preßkuchens) wurden mit
- 24 Teilen: des Hilfsmittels 2 (s. Tab. 1) versetzt und gegebenenfalls mit Schwefelsäure auf den pH-Wert 6 bis 7 eingestellt. Als Entschäumer wurden
- 0,1 Teile: Surfynol 104E (Fa. Air Products = 2,4,7,9-Tetramethyl-5-decin-4,7-diol) zugesetzt. Mit Wasser wurde der Feststoffgehalt auf ca. 40 bis 50 % eingestellt. Anschließend erfolgte bei Raumtemperatur die Naßzerkleinerung in einer Perlmühle bis zur erforderlichen Feinverteilung (90 % ≤ 1 µm). Zur Einstellung der gewünschten Farbstärke wurden
- 46 Teile: eines anionischen Stellmittels vom Typ Naphthalinsulfonsäure-Formaldehyd-Kondensat in Form einer konzentrierten Lösung zugesetzt. Im Anschluß an diesen Formier- und Einstellschritt wurde das Gemisch durch Sprühtrocknung getrocknet. Dem entstehenden Pulver bzw. Granulat kann vor oder nach der Trocknung ein Entstaubungsmittel zugesetzt werden (im allgemeinen Mineralöle).

Mit gleichem Erfolg wurden auch die weiteren Hilfsmittelgemische aus Tab. 1 eingesetzt.

Färbte man mit diesem formierten Farbstoff Polyesterfasern unter HT-Bedingungen, so zeichnete er sich durch eine hervorragende Dispersionsstabilität im Färbebad, vor allem in der Aufheizphase, aus. Der Farbstoff zog gleichmäßig, d.h. mit exzellenter Egalität auf die Faser auf. Auf den Zusatz weiterer Egalisierhilfsmittel im Färbebad konnte verzichtet werden.

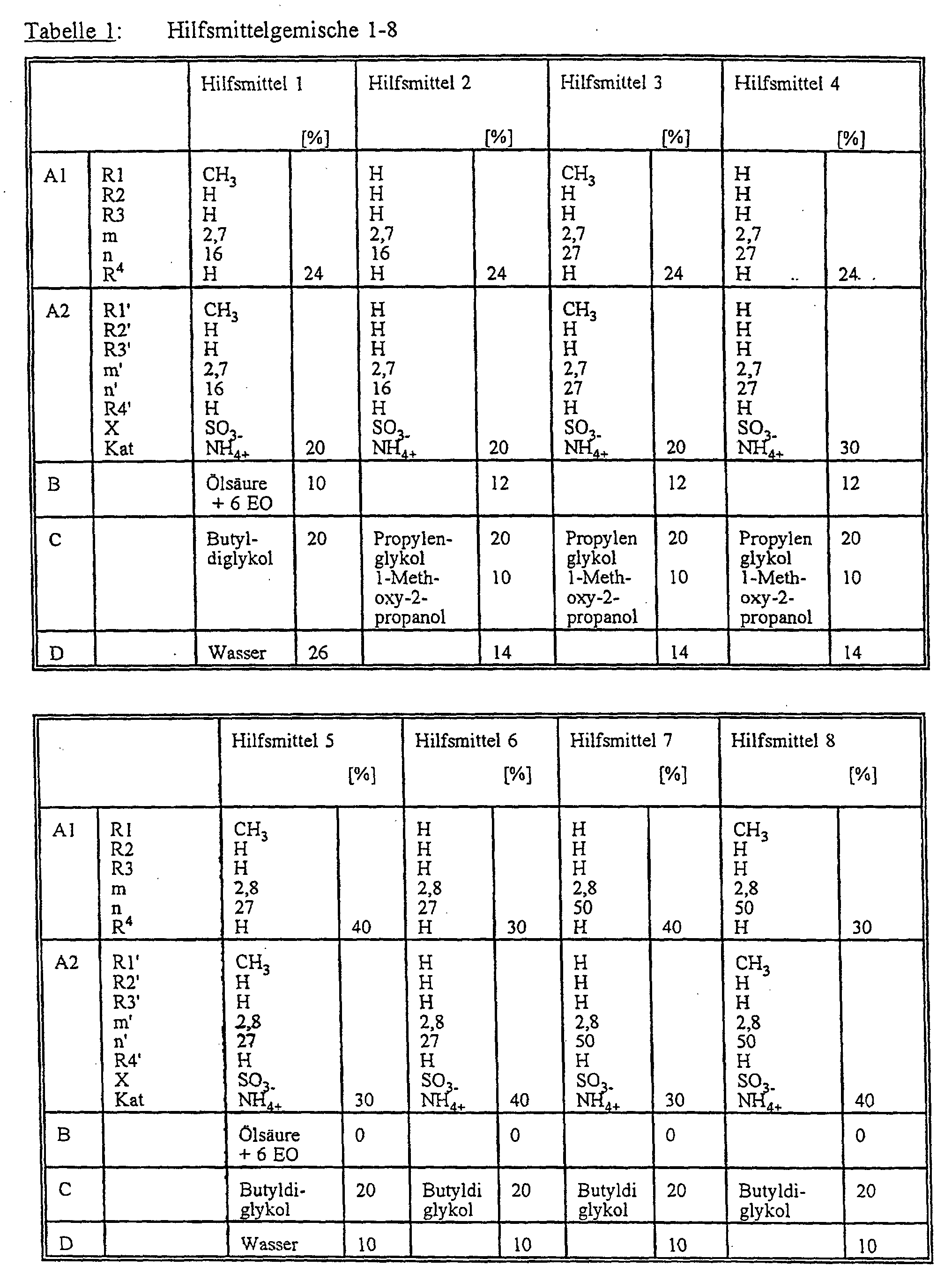

### Beispiel 2

Bei der Herstellung flüssiger Farbstoffpräparationen wurde wie folgt vorgegangen:
- 34 Teile: Farbstoff C.I. Disperse Red 343 (in Form des wasserfeuchten Preßkuchens) wurden mit
- 24 Teilen: des Hilfsmittels 2 (s.Tab. 1) versetzt und gegebenenfalls mit Schwefelsäure auf den pH-Wert 6 bis 7 eingestellt. Weitere Zusätze waren:
- 0,1 Teile: Surfynol 104E (Fa. Air Products) als Entschäumer,
- 0,3 Teile: Proxel GXL (Fa. ICI = 1,2-Benzisothiazol-3(2H)-on als wäßrige Dipropylenglykollösung) als Konservierungsmittel und
- 41,6 Teile: Wasser.

Anschließend erfolgte bei Raumtemperatur die Naßzerkleinerung (analog Beispiel 1) bis zur erforderlichen Feinverteilung (90 % ≤ 1 µm).

Die resultierende Farbstoffsuspension zeichnete sich durch ein hervorragende Lagerstabilität aus: Beständigkeit gegen Eintrocknen, Kälte-Gefrierschutz, keine Sedimentationsneigung, kein Agglomerieren.

Die färberischen Eigenschaften entsprachen denen des ersten Beispiels.

### Beispiel 3

In einem Dissolver wurde eine homogene Mischung hergestellt, bestehend aus
- 32 Teilen: des Farbstoffs C.I. Pigment Yellow 83,
- 25 Teilen: des Hilfsmittels 2 (s. Tab. 1),
- 7 Teilen: Polyethylenglykol und
- 36 Teilen: Wasser.

Anschließend erfolgte eine Mahlung in einer diskontinuierlichen Rührwerksperlmühle unter Kühlung bis eine Teilchengrößen-Verteilung von <0,5 µm bei mehr als 90 % aller Teilchen erreicht worden war.

Die erhaltene Pigmentpräparation besaß eine Viskosität von ∼120 mPas bei 23°C und einem Schergefälle von D = 7s⁻¹ sowie ausgezeichnete Fließfähigkeit.

Sie besaß ferner eine hohe Farbstärke und war hervorragend geeignet als Abtönfarbe für handelsübliche Anstrich-, Lack- und Textildruckfarben sowie als Färbemittel für Papier.

### B. Färbereibeispiele

### Beispiel 4 (Kreuzspulfärbung)

- Material:: 100 % PES texturiert (Spulengewicht 4 kg)
- Maschine:: HT-Kreuzspulfärbeapparat mit Luftpolster, Flottenverhältnis 1:10
- Rezept:: übliche Dispersionsfarbstoff-Flotte, 2,0 % Gemisch aus Beispiel 1, pH 4 bis 5
- Färbeverfahren:: Starttemperatur 80°C Aufheizgeschwindigkeit 1°C/min Maximaltemperatur 130°C Färbezeit bei T_{Max} 45 min
- Resultat:: Egalität einwandfrei, d.h. keinerlei AMI-Effekt nach dem Verstricken

### Beispiel 5 (Stückfärbung)

- Material:: 100 % PES-Filament
- Maschine:: HT-Baumfärbeapparat
- Rezept:: übliche Dispersionsfarbstoff-Flotte mit 2 % Gemisch aus Beispiel 1, pH 4-5
- Färbeverfahren:: Starttemperatur 80°C Aufheizgeschwindigkeit 1°C/min Maximaltemperatur 130°C Färbezeit bei T_{Max} 30 min
- Resultat:: Einwandfreie Flächenegalität, konstanter Differenzdruck (Innen-Außen) und Pumpenleistung

### Beispiel 6 (Stückfärbung)

- Material:: 100 % PES-Filament
- Maschine:: HT-Jigger, Flottenverhältnis 1:6, Warenlaufgeschwindigkeit 80 m/min
- Rezept:: übliche Dispersionsfarbstoff-Flotte mit 2 % Gemisch nach Beispiel 1, pH 4 bis 5
- Färbeverfahren:: Bei 60°C Zugabe der Chemikalien, Hilfsmittel und Farbstoff-Flotte. In 15 min aufheizen auf 130°C, 5 Passagen à 80 m/min
- Resultat:: Einwandfreie Egalität, kein Kanten- und Endenablauf. Kein Absetzen der Farbstoffe im Maschinen-Innenraum mit der Gefahr von Fleckenbildung auf der Ware.

### C. Weißtönerbeispiel

### Beispiel 7

- Material:: 100 % PES
- Maschine:: Zirkulationsapparat, Flottenverhältnis 1:5
- Rezept:: übliche nichtionogene Weißtöner-Flotte mit 2 % Gemisch nach Bespiel 1, jedoch mit Weißtöner an Stelle des Farbstoffs, pH 4 bis 5
- Verfahren:: Bei 50°C Zugabe der Chemikalien, Hilfsmittel und Weißtöner-Flotte, 5 min Verweilzeit, aufheizen auf 105°C mit 3°C/min und von 105 bis 130°C mit 1°C/min, 45 min bei 130°C
- Resultat:: Einwandfreie Egalität, kein Kanten- und Endenablauf. Kein Absetzen der Weißtöner im Maschinen-Innenraum mit der Gefahr von Fleckenbildung auf der Ware

## Patentansprüche

1. Tensidgemische, bestehend aus
A1) Alkoxylierungsprodukten von Styrol-Phenol-Kondensaten der Formel 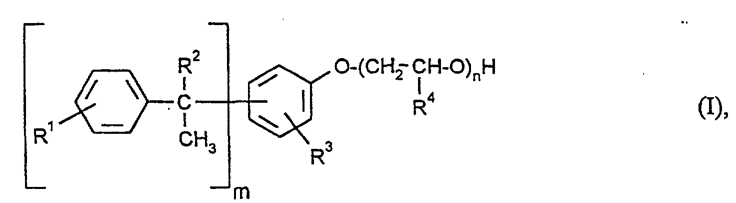 in der
R¹ Wasserstoff oder C₁-C₄-Alkyl bedeutet,
R² für Wasserstoff oder CH₃ steht,
R³ Wasserstoff, C₁-C₄-Alkyl, C₁-C₄-Alkoxy, C₁-C₄-Alkoxycarbonyl, Phenyl oder einen ankondensierten Benzolkern bedeutet,
m eine Zahl von 1 bis 3 bedeutet,
n eine Zahl von 6 bis 100 bedeutet, wobei die obige Formel auch Gemische mit verschiedenen Werten für m und n umfaßt,
R⁴ für Wasserstoff, ein Gemisch aus Wasserstoff und CH₃ oder ein Gemisch aus Wasserstoff und Phenyl steht, wobei im Falle der Mitanwesenheit von CH₃ in den verschiedenen -(-CH₂-CH(R⁴)-O-)-Gruppen in 0 bis 60 % des Gesamtwertes von n R⁴ für CH₃ und in 100 bis 40 % des Gesamtwertes von n R⁴ für Wasserstoff steht und wobei im Falle der Mitanwesenheit von Phenyl in den verschiedenen -(-CH₂-CH(R⁴)-O-)-Gruppen in 0 bis 40 % des Gesamtwertes von n R⁴ für Phenyl und in 100 bis 60 % des Gesamtwertes von n R⁴ für Wasserstoff steht,
A2) Estern der Alkoxylierungsprodukte (I) der Formel 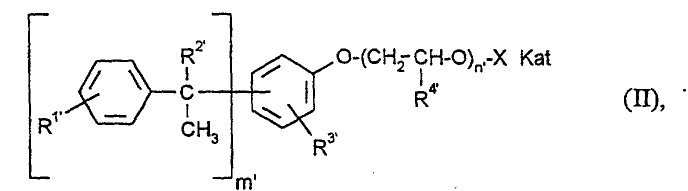 in der
R^{1'}, R^{2'}, R^{3'}, R^{4'}, m' und n' den Bedeutungsumfang von R¹, R², R³, R⁴, m bzw. n, jedoch unabhängig hiervon, annehmen,
X die Gruppe -SO₃^{⊖}, -SO₂^{⊖} oder -PO₃^{⊖⊖} bedeutet und
Kat ein Kation aus der Gruppe von Li^{⊕}, Na^{⊕}, K^{⊕}, NH₄^{⊕}, HO-CH₂CH₂-NH₃^{⊕}, 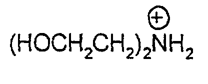 oder 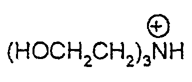 ist, wobei im Falle von X = -PO₃^{⊖⊖} zwei Kat vorliegen,
B) nichtionischen Tensiden,
C) Stellmitteln und
D) Wasser,
wobei, bezogen auf das Gesamtgewicht von A1), A2), B), C) und D), A1) 0 bis 95 %, A2) 5 bis 100 %, B) 0 bis 30 %, C) 0 bis 40 % und D) 0 bis 80 % ausmachen.

2. Tensidgemische nach Anspruch 1, in denen A1) 0 bis 85 % und A2) 15 bis 100 % des Gesamtgewichts aller Bestandteile ausmachen.

3. Tensidgemische nach Anspruch 1, in denen im Bestandteil A2) an die Stelle von R^{1'}, R^{2'}, R^{3'}, R^{4'}, m' und n' die entsprechenden Reste und Indices R¹, R², R³, R⁴, m und n treten.

4. Tensidgemische nach Anspruch 1, enthaltend als Bestandteil A1) Alkoxylierungsprodukte der Formel 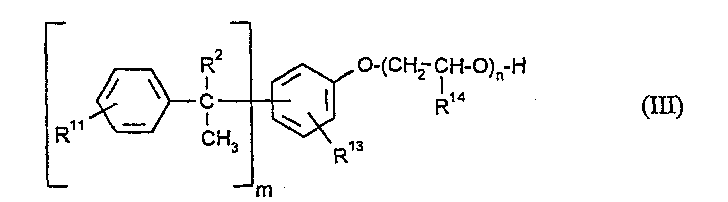 und davon abgeleitete Ester A2), in denen
R¹¹ Wasserstoff oder CH₃,
R¹³ Wasserstoff, CH₃, OCH₃ oder COOCH₃ und
R¹⁴ Wasserstoff oder Methyl bedeuten, wobei für R¹⁴ bei Mitanwesenheit von CH₃ das gleiche Proviso wie für R⁴ in Anspruch 1 gilt, und
R², m und n den Bedeutungsumfang, der in Anspruch 1 angegeben ist, haben.

5. Tensidgemische nach Anspruch 4, enthaltend als Bestandteil A1) Alkoxylierungsprodukte der Formel 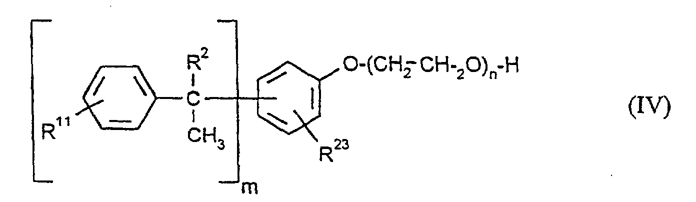 und davon abgeleitete Ester A2), in denen
R²³ für Wasserstoff oder CH₃ steht und
R¹¹, R² und n den Bedeutungsumfang wie in Anspruch 4 haben.

6. Tensidgemische nach Anspruch 5, enthaltend als Bestandteil A1) Alkoxylierungsprodukte der Formel 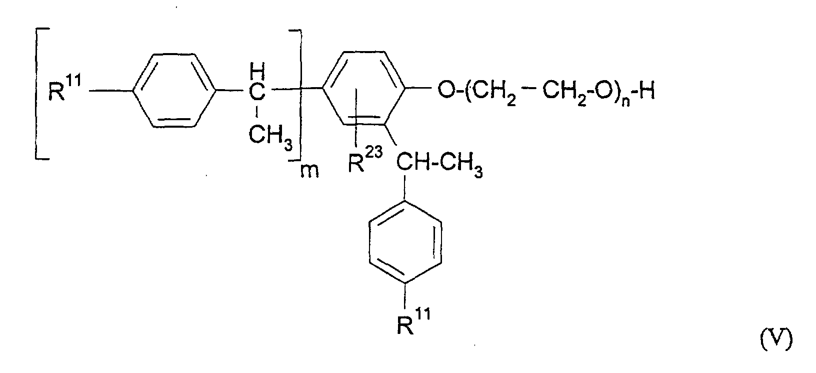 und davon abgeleitete Ester A2), in denen
R¹¹, R²³ und n den Bedeutungsumfang wie in Anspruch 5 haben.

7. Tensidgemische nach Anspruch 1, in denen der Index m einen Wert von 1,5-2,8, bevorzugt von 2,5-2,8 annimmt.

8. Verwendung der Tensidgemische nach Anspruch 1 als Dispergiermittel zur Formierung nicht wasserlöslicher Farbstoffe, Pigmente und Weißtöner und als Färbereihilfsmittel für Färbungen bzw. Weißtönen von Polyesterfasern bzw. Fasermischungen mit Wolle, Baumwolle, Polyacryl oder Polyamid mit nicht wasserlöslichen Farbstoffen.

## Claims

1. Surfactant mixtures comprising
A1) Alkoxylation products of styrene-phenol condensates of the formula 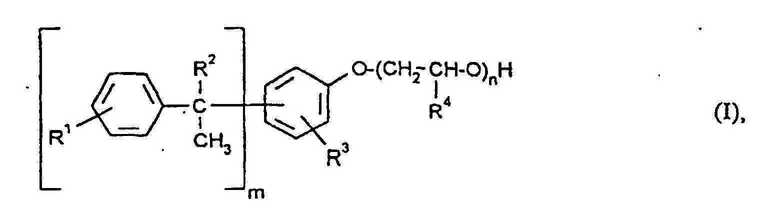 in which
R¹ denotes hydrogen or C₁-C₄-alkyl,
R² represents hydrogen or CH₃,
R³ denotes hydrogen, C₁-C₄-alkyl, C₁-C₄-alkoxy, C₁-C₄-alkoxycarbonyl, phenyl or a fused-on benzene nucleus,
m denotes a number from 1 to 3,
n denotes a number from 6 to 100, where the above formula also includes mixtures with various values for m and n,
R⁴ represents hydrogen, a mixture of hydrogen and CH₃ or a mixture of hydrogen and phenyl, where, in the case where CH₃ is also present in the various -(-CH₂-CH(R⁴)-O)- groups, in 0 to 60% of the total value of n R⁴ represents CH₃ and in 100 to 40% of the total value of n R⁴ represents hydrogen, and where, in the case where phenyl is also present in the various -(-CH₂-CH(R⁴)-O)- groups, in 0 to 40% of the total value of n R⁴ represents phenyl and in 100 to 60% of the total value of n R⁴ represents hydrogen,
A2) Esters of the alkoxylation products (I) of the formula 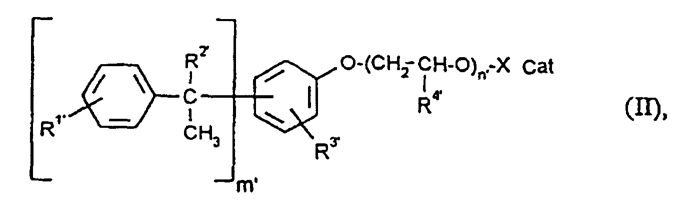 in which
R^{1'}, R^{2'}, R^{3'}, R^{4'}, m' and n' assume the scope of meaning of R¹, R², R³,
R⁴, m and n, but independently of these,
X denotes the group -SO₃^{⊖}, -SO₂^{⊖} or -PO₃^{⊖⊖} and
Cat is a cation from the group consisting of Li^{⊕}, Na^{⊕}, K^{⊕}, NH₄^{⊕}, HO-CH₂CH₂-NH₃^{⊕}, 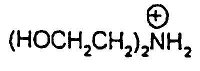 or 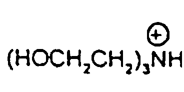 where, in the case where X = -PO₃^{⊖⊖}, two Cat are present,
B) nonionic surfactants,
C) standardizing agents and
D) water,
where, based on the total weight of A1), A2), B), C) and D), A1) makes up 0 to 95%, A2) makes up 5 to 100%, B) makes up 0 to 30%, C) makes up 0 to 40% and D) makes up 0 to 80%.

2. Surfactant mixtures according to Claim 1, in which A1) makes up 0 to 85% and A2) makes up 15 to 100% of the total weight of all the constituents.

3. Surfactant mixtures according to Claim 1, in which in constituent A2), instead of R^{1'}, R^{2'}, R^{3'}, R^{4'}, m' and n', the corresponding radicals and indices R¹, R², R³, R⁴, m and n occur.

4. Surfactant mixtures according to Claim 1, comprising, as constituent Al), alkoxylation products of the formula 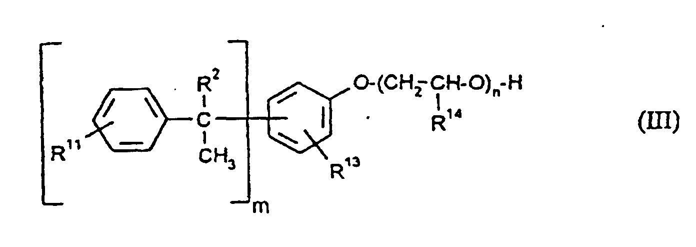 and esters A2) derived therefrom, in which
R¹¹ is hydrogen or CH₃,
R¹³ is hydrogen, CH₃, OCH₃ or COOCH₃ and
R¹⁴ is hydrogen or methyl, where, if CH₃ is also present, the same proviso applies to R¹⁴ as to R⁴ in Claim 1, and
R², m and n have the scope of meaning given in Claim 1.

5. Surfactant mixtures according to Claim 4, comprising, as constituent Al), alkoxylation products of the formula 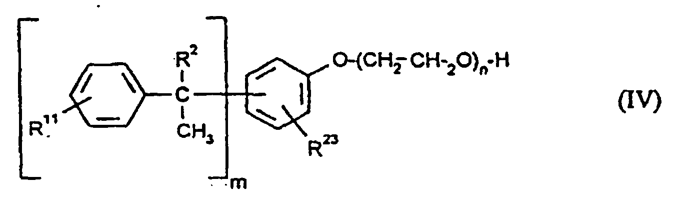 and esters A2) derived therefrom, in which
R²³ represents hydrogen or CH₃ and
R¹¹, R² and n have the scope of meaning as in Claim 4.

6. Surfactant mixtures according to Claim 5, comprising, as constituent A1), alkoxylation products of the formula 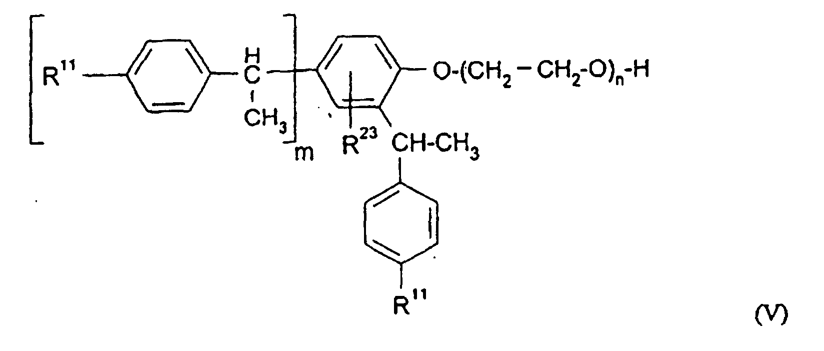 and esters A2) derived therefrom, in which
R¹¹, R²³ and n have the scope of meaning as in Claim 5.

7. Surfactant mixtures according to Claim 1, in which the index m assumes a value of 1.5-2.8, preferably 2.5-2.8.

8. Use of surfactant mixtures according to Claim I as dispersing agents for finishing water-insoluble dyestuffs, pigments and whiteners and as dyeing auxiliaries for dyeing processes or whitening processes on polyester fibres or fibre mixtures with wool, cotton, polyacrylic or polyamide using water-insoluble dyestuffs.

## Revendications

1. Mélanges d'agents tensioactifs consistant en
A1) des produits d'alcoxylation de condensats styrène-phénol de formule 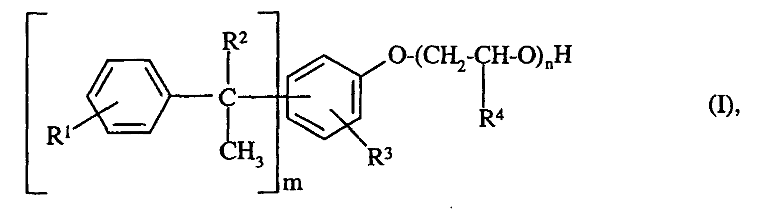 dans laquelle
R¹ représente l'hydrogène ou un groupe alkyle en C₁-C₄,
R² représente l'hydrogène ou CH₃,
R³ représente l'hydrogène, un groupe alkyle en C₁-C₄, alcoxy en C₁-C₄, (alcoxy en C₁-C₄)carbonyle, phényle, ou un noyau benzénique condensé,
m est un nombre allant de 1 à 3,
n est un nombre allant de 6 à 100, la formule ci-dessus s'appliquant également à des mélanges pour lesquels m et n ont des valeurs différentes,
R⁴ représente l'hydrogène, un mélange d'hydrogène et de CH₃ ou un mélange d'hydrogène et de phényle, étant précisé que dans le cas de la présence simultanée de CH₃ dans les divers groupes -(-CH₂-CH(R⁴)-O-)-, R⁴ représente CH₃ pour 0 à 60 % de la valeur totale de n et l'hydrogène pour 100 à 40 % de la valeur totale de n, et dans le cas de la présence simultanée de phényle dans les divers groupes -(-CH₂-CH(R⁴)-O-)-, R⁴ représente un groupe phényle pour 0 à 40 % de la valeur totale de n et l'hydrogène pour 100 à 60 % de la valeur totale de n,
A2) des esters des produits d'alcoxylation (I) de formule 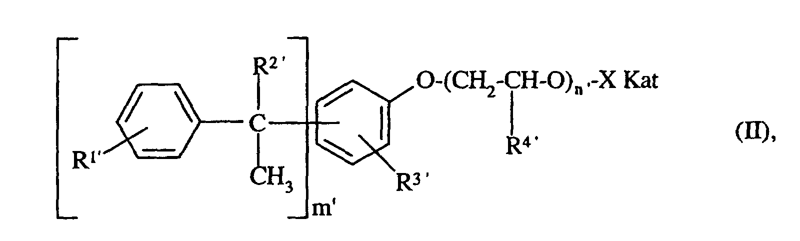
dans laquelle
R¹', R²', R³', R⁴', m' et n' ont les significations indiquées respectivement pour R¹, R², R³, R⁴, m et n mais indépendamment de ceux-ci,
X représente un groupe -SO₃^{⊖}, -SO₂^{⊖} ou -PO₃^{⊖⊖} et
Kat représente un cation du groupe formé par Li^{⊕}, Na^{⊕}, K^{⊕}, NH₄^{⊕}, HO-CH₂CH₂-NH₃^{⊕}, (HOCH₂CH₂)₂NH₂ ou (HOCH₂CH₂)₃ NH,
avec deux cations dans le cas où X = -PO₃^{⊖⊖},
B) des agents tensioactifs non ioniques,
C) des diluants, et
D) de l'eau,
A1) représentant de 0 à 95 %, A2) de 5 à 100 %, B) de 0 à 30 %, C) de 0 à 40 % et D) de 0 à 80 % du poids total de A1, A2, B), C) et D).

2. Mélanges d'agents tensioactifs selon la revendication 1, dans lesquels A1) représente de 0 à 85 % et A2) de 15 à 100 % du poids total de tous les constituants.

3. Mélanges d'agents tensioactifs selon la revendication 1, dans lesquels, dans le constituant A2), à la place de R¹', R²', R³', R⁴', m' et n', il y a les symboles et indices correspondants R¹, R², R³, R⁴, m et n.

4. Mélanges d'agents tensioactifs selon la revendication 1, contenant en tant que constituant A1) des produits d'alcoxylation de formule 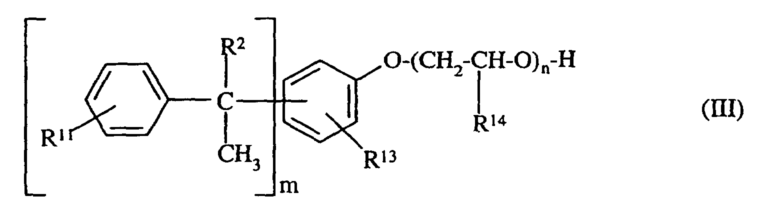 et leurs esters dérivés A2), pour lesquels
R¹¹ représente l'hydrogène ou CH₃,
R¹³ représente l'hydrogène, CH₃, OCH₃ ou COOCH₃ et
R¹⁴ représente l'hydrogène ou un groupe méthyle, étant précisé que dans le cas où il y a présence simultanée de CH₃, R¹⁴ répond aux mêmes conditions que R⁴ dans la revendication 1, et
R², m et n ont les significations indiquées dans la revendication 1.

5. Mélanges d'agents tensioactifs selon la revendication 4, contenant en tant que constituant A1) des produits d'alcoxylation de formule 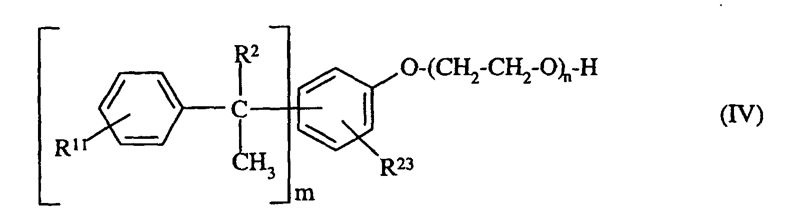 et leurs esters dérivés A2), pour lesquels
R²³ représente l'hydrogène ou CH₃, et
R¹¹, R² et n ont les significations indiquées dans la revendication 4.

6. Mélanges d'agents tensioactifs selon la revendication 5, contenant en tant que constituant A1) des produits d'alcoxylation de formule 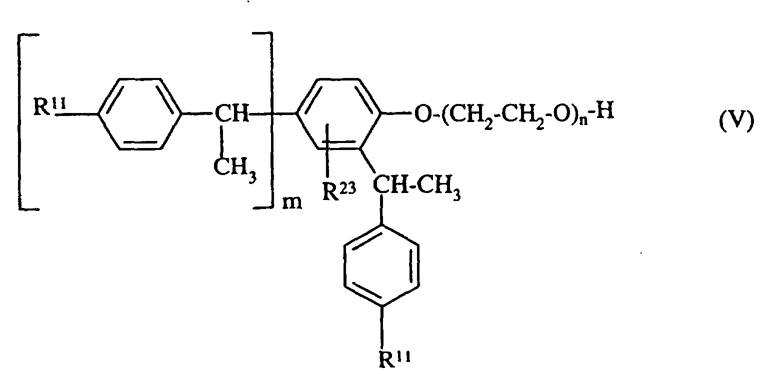 et leurs esters dérivés A2), pour lesquels
R¹¹, R²³ et n ont les significations indiquées dans la revendication 5.

7. Mélanges d'agents tensioactifs selon la revendication 1, pour lesquels l'indice m a une valeur de 1,5 à 2,8, de préférence de 2,5 à 2,8.

8. Utilisation des mélanges d'agents tensioactifs selon la revendication 1 en tant qu'agents dispersants pour la mise en forme de colorants, pigments et azureurs insolubles dans l'eau et en tant que produits auxiliaires de teinture pour des teintures ou azurages de fibres de polyesters ou de mélanges de fibres contenant de la laine, du coton, des fibres polyacryliques ou de polyamides à l'aide de colorants insolubles dans l'eau.
